# EUROPÄISCHE PATENTSCHRIFT

(11) **EP 2 246 673 B1**
(45) Veröffentlichungstag und Bekanntmachung des Hinweises auf die Patenterteilung: **06.06.2012**
(21) Anmeldenummer: 09158950.7
(22) Anmeldetag: 28.04.2009
(51) Int. Cl.: G01F 13/00, G01G 11/10

(54) **Verfahren zum Bestimmen des Volumens von Fördergut und Vorrichtung**
Method for determining the volume of loads and device
Procédé de détermination du volume de produits à transporter et dispositif

(43) Veröffentlichungstag der Anmeldung: 03.11.2010
(73) Patentinhaber: SICK AG, 79183 Waldkirch (DE)
(72) Erfinder: Heidepriem, Sebastian, 79359, Riegel (DE)
(74) Vertreter: Ludewigt, Christoph

(56) Entgegenhaltungen:
- EP-A- 1 653 202
- DE-A1- 2 100 280
- DE-A1- 3 735 905
- DE-A1- 19 631 926
- JP-A- 3 195 904

## Beschreibung

Die Erfindung betrifft ein Verfahren und eine Vorrichtung zum Bestimmen des Volumens eines auf einem Förderband geförderten Förderguts.

Bei dem Transport von Schüttgütern, z.B. Kohle, Erz oder Kies, auf Förderbändern besteht die Anforderung, die transportierte Menge (Masse) möglichst genau zu erfassen. Anwendung findet die Messung dabei zum Beispiel bei der Protokollierung, der Abrechnung oder auch bei der Steuerung von Förder- bzw. Abbaugeräten.

Es ist bekannt, zu diesem Zweck so genannte Bandwaagen einzusetzen. Eine Bandwaage ist ein Transportband, welches auf so genannten Messdosen platziert ist, so dass die dort befindliche Masse an Fördergut elektrisch ermittelt werden kann. Derartige Bandwaagen sind jedoch sehr ungenau, so dass zur Verbesserung mit der DE 196 31 926 A1 eine Messeinrichtung vorgeschlagen wurde, bei der mit Hilfe eines Laserscanners, dessen Scanebene quer zur Förderrichtung angeordnet ist, so dass der Laserstrahl periodisch über das Förderband mit dem Fördergut geschwenkt wird, das Profil des Schüttgutes auf dem Förderband ermittelt werden kann. Aus dem Profil und der geförderten Strecke kann das Volumen und daraus letztlich die Masse des Fördergutes errechnet werden. Ein solches Volumenmesssystem, bei dem das Volumen von Fördergut auf einem Transportband unter Einsatz eines Laserscanners bestimmt wird, wobei mittels Entfernungsmessung die Höhe des Förderguts auf dem Förderband bestimmt wird und somit letztendlich das Volumen, ist auch aus der DE 37 35 905 A1 bekannt.

Bei schlecht ausgelasteten Transportbändern liefert aber auch die verbesserte Messvorrichtung mit dem Laserscanner unzureichend genaue Ergebnisse, weil sich Messfehler, die sich aus der Erfassung des leeren Transportbandes ergeben, aufintegriert werden, so dass sie sich insgesamt zu einem vergleichsweise hohen relativen Fehler, bezogen auf die geringe Menge Fördergut, summieren. Bei längeren Leerlaufzeiten oder unregelmäßiger Beschickung des Transportbandes mit Fördergut kann dieser Fehler die Messgenauigkeit bis zur Unbrauchbarkeit der Messung herabsetzen. Durch dieses Aufintegrieren eines Nullpunktfehlers können leicht relative Messfehler zwischen 10 % und größer 100 % erreicht werden. Aus diesem Grund wird in solchen Fällen auf Einzelmessungen ausgewichen, wozu so genannte Schüttwaagen mit dem zu messenden Fördergut solange befüllt werden, bis sie ein bestimmtes Gewicht erreicht haben. Dann schütten diese Schüttwaagen das Material wieder aus und erhöhen einen Zähler. Dieses Verfahren ist umständlich und aufwändig, insbesondere weil eine zusätzliche Waage benötigt wird. Des Weiteren verlangsamen Einzelmessungen mittels Schüttwaagen die gesamte Materialflussgeschwindigkeit, da jede Schüttung zumindest beim Erreichen der maximalen Schüttmenge langsam und genau dosiert werden muss.

Eine weitere Möglichkeit zur besseren Erfassung schlecht ausgelasteter Förderbänder besteht darin, die Geschwindigkeit des Transportbandes derart anzupassen, dass die Befüllung mit Fördergut optimal ist. Eine Regelung der Geschwindigkeit des Transportbandes zu Gunsten einer optimalen Befüllung ist zwar denkbar, jedoch hat diese den Nachteil, dass eine aufwändige Steuerung notwendig ist und zusätzliche Sensoren zur Erfassung der jeweiligen Füllmenge vorgesehen sein müssen. Des Weiteren muss zusätzliche Energie aufgebracht werden für das häufige Beschleunigen des Transportbandes.

Ausgehend von diesem Stand der Technik ist es Aufgabe der Erfindung, ein verbessertes Verfahren zum Bestimmen des Volumens und damit letztendlich der Masse eines auf einem Förderband geförderten Fördergutes und eine entsprechende Vorrichtung bereitzustellen.

Diese Aufgabe wird gelöst durch ein Verfahren mit den Merkmalen des Anspruchs 1 und eine Vorrichtung mit den Merkmalen des Anspruchs 8.

Das erfindungsgemäße Verfahren umfasst folgende Schritte:
- Erfassen eines Höhenprofils quer zur Förderrichtung mittels eines optoelektronischen Entfernungsmessgeräts, insbesondere eines Scanners, der das Profil mittels einer Reihe von in einer Scanebene liegenden Ortsdaten in Form von Polarkoordinaten mit Entfernungs- und Winkelwerten zwischen dem Entfernungsmessgerät und dem Förderband über die volle Breite des Förderbandes erfasst,
- Klassifizieren der beim Erfassen des Profils erhaltenen Ortsdaten in Födergutdaten und Förderbanddaten, wobei diejenigen Ortsdaten als Fördergutdaten identifiziert werden, deren Abstand zu einer Nulllinie einen Schwellwert übersteigt,
- abschnittsweises Berechnen eines Abschnittsvolumens des Förderguts ausschließlich anhand der Fördergutdaten und eines in Förderrichtung verlaufenden Förderabschnitts und
- Aufintegrieren der Abschnittsvolumina zu dem geförderten Volumen.

Da nach dem erfindungsgemäßen Verfahren eine Klassifizierung der beim Erfassen des Profils erhaltenen Ortsdaten, die jeweils aus Entfernungs- und Winkelwerten bestehen, in Fördergutdaten und Förderbanddaten erfolgt, ist es möglich, das Volumen des Förderguts ausschließlich anhand der Fördergutdaten zu bestimmen und die Förderbanddaten und damit diejenigen Entfernungswerte, die dem nicht beladenen Förderband entsprechen, zu verwerfen. Dadurch kann vermieden werden, dass die oben genannten Nullpunktfehler aufintegriert werden und insbesondere bei schlecht ausgelasteten Transportbändern, also bei geringen Mengen an Fördergut, eine erheblich verbesserte Messgenauigkeit erreicht werden kann.

Nach dem neuen Verfahren kann also die neue Messvorrichtung unterscheiden, an welchen Stellen des Förderbandes Fördergut liegt und an welchen Stellen nur das Förderband zu "sehen" ist. Die Erfassung des Volumens des Förderguts erfolgt somit ausschließlich an den Stellen des Förderbandes, an denen auch Fördergut vorhanden ist.

Dabei werden zum Klassifizieren der Ortsdaten zunächst diejenigen Ortsdaten als Fördergutdaten identifiziert, deren Abstand zu einer Nulllinie einen Schwellwert übersteigt. Die Nulllinie liegt dabei im Wesentlichen auf der Höhe des leeren Förderbands. Dies ist eine einfache und leicht zu realisierende Möglichkeit der Differenzierung zwischen Fördergutdaten und Förderbanddaten.

Um die Nulllinie in einfacher Weise bestimmen zu können, wird vor Beginn einer Volumenbestimmung das Förderband ohne Fördergut vermessen zum Erhalt von Förderbanddaten über die gesamte Förderbandbreite. Aus diesen Förderbanddaten kann die Nulllinie in einfacher Weise festgelegt werden. Alternativ könnten die Förderbanddaten auch manuell eingegeben oder z. B. aus einem externen Speicher eingelesen werden.

Zur Festlegung des Schwellwertes wird bevorzugt die Entfernungswertstreuung in den Förderbanddaten berücksichtigt, so dass dadurch sichergestellt ist, dass die Förderbanddaten möglichst exakt auch diejenigen Daten sind, die zu einem leeren Förderbandbereich gehören.

Wenn anhand der während der Volumenbestimmung erhaltenen Förderbanddaten die Lage der Nulllinie korrigiert wird, kann eine kontinuierliche Korrektur der Nulllinie kontinuierlich während der Volumenerfassung vorgenommen werden und die Messgenauigkeit weiter erhöht werden.

Vorteilhafterweise werden die Ortsdaten mittels eines oberhalb des Förderbandes angeordneten Scanners, insbesondere eines Laserscanners, erfasst, denn dafür hat sich ein Laserscanner bereits bewährt (siehe zum Beispiel DE 196 31 926 A1).

Innerhalb eines Scans quer über das Förderband werden bevorzugt die Fördergutdaten und Förderbanddaten beim Klassifizieren jeweils Winkelbereichen zugeordnet, so dass in einfacher Weise beim Aufintegrieren zum Erhalten des Gesamtvolumens des Förderguts komplette Winkelbereiche, die den Förderbanddaten entsprechen, verworfen werden können.

Eine erfindungsgemäße Vorrichtung zur Bestimmung des Volumens eines auf einem Förderband geförderten Förderguts umfasst einen Laserscanner einen Lichtsender, eine Lichtablenkeinheit zur periodischen Ablenkung des Lichtes in eine Scanebene, einen Empfänger zum Empfang von an dem Förderband oder dem Fördergut remittierten Licht, eine Auswerteeinheit zur Bestimmung von Ortsdaten in Form von Polarkoordinaten für das remittierte Licht, zur Erstellung eines Höhenprofils quer zur Förderrichtung. Weiter weist die Vorrichtung eine Volumenauswerteeinheit zur Bestimmung des Volumens des geförderten Förderguts auf. Erfindungsgemäß sind weiter Klassifizierungsmittel zur Klassifizierung der Ortsdaten in Fördergutdaten und Förderbanddaten vorgesehen und die Volumenauswerteinheit weist Rechenmittel auf zum abschnittsweisen Berechnen eines Abschnittsvolumens des Förderguts ausschließlich anhand der Fördergutdaten und eines in Förderrichtung verlaufenden Förderabschnitts sowie Integriermittel zum Aufintegrieren der Abschnittsvolumina zu dem geförderten Volumen.

Im Folgenden wird die Erfindung anhand eines Ausführungsbeispiels unter Bezugnahme auf die Zeichnung im Einzelnen erläutert. In der Zeichnung zeigen:
- Fig. 1: eine schematische, perspektivische Ansicht einer erfindungsgemäßen Vorrichtung in einer Anwendung an einem teilweise mit Fördergut be- ladenen Förderband;
- Fig. 2: einen Querschnitt durch die Vorrichtung nach Fig. 1 entlang der Scan- ebene;
- Fig. 3: einen Laserscanner der erfindungsgemäßen Vorrichtung;
- Fig. 4 bis 7: schematische Darstellungen wie Fig. 2 zur Verdeutlichung des erfin- dungsgemäßen Verfahrens.

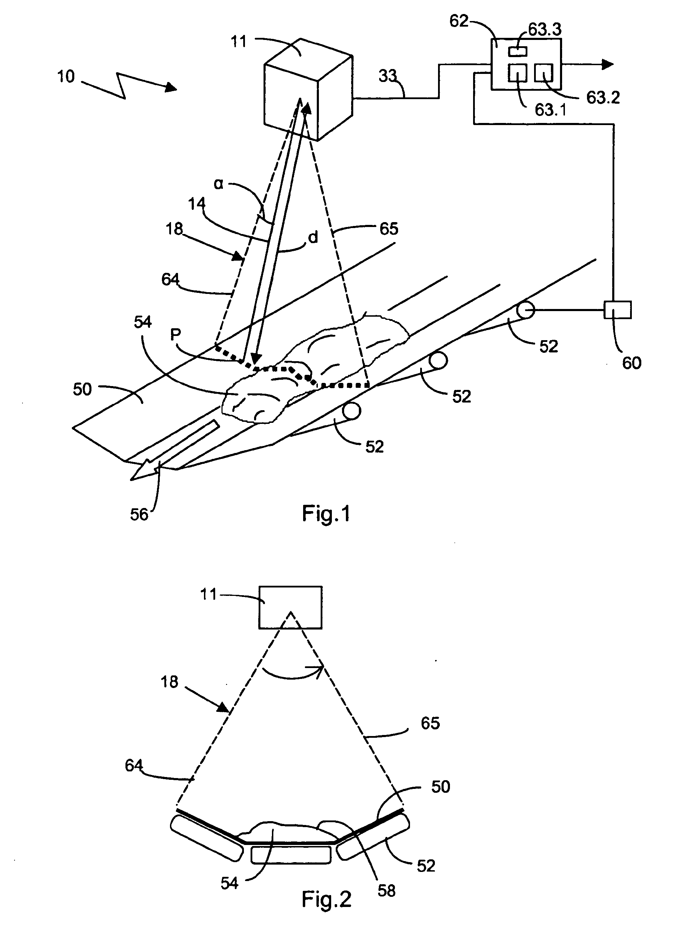

In Fig. 1 und 2 ist eine erfindungsgemäße Vorrichtung 10 an einem Förderband 50, das durch Rollen 52 angetrieben wird, dargestellt. In dem Ausführungsbeispiel wird ein Fördergut 54 über das Förderband 50 in eine Förderrichtung 56 gefördert. Mittels der erfindungsgemäßen Vorrichtung 10 wird das Volumen des geförderten Förderguts 54, bei dem es sich beispielsweise um Schüttgüter wie Kohle, Erdreich, Kies, Erz oder ähnlichem handeln kann, bestimmt, indem die Vorrichtung 10 einen optoelektronischen Entfernungsmesser, insbesondere einen Laserscanner 11, umfasst, der in einer Scanebene 18 das Profil 58 über die volle Breite des Förderbandes 50 erfasst und über die geförderte Strecke, die beispielsweise von einem Encoder 60 erfasst werden kann, das Volumen in einer Volumenauswerteeinheit 62 ermittelt. Dazu erhält die Volumenauswerteeinheit 62 einerseits die Profildaten von dem Laserscanner 11 und andererseits Weg- bzw. Encoderdaten von dem Encoder 60 und kann in einer Recheneinheit 63.1 abschnittsweise das Volumen aus diesen Daten berechnen und dann mittels Integriermitteln 63.2 die Abschnittsvolumina zu dem geförderten Volumen aufintegrieren. Gegebenenfalls können weitere Mittel vorgesehen sein, um aus dem Volumen die Masse des geförderten Förderguts 54 zu bestimmen.

Die Profildaten umfassen eine Reihe von in der Scanebene liegenden Ortsdaten in Form von Polarkoordinaten mit Winkelwerten α und zugehörigen Entfernungswerten d.

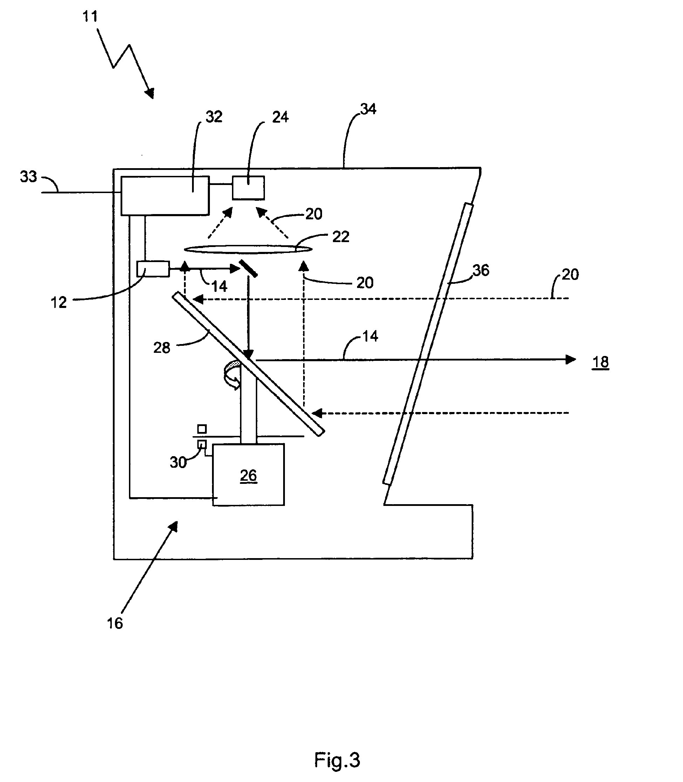

Fig. 3 zeigt schematisch den Aufbau des Laserscanners 11 der erfindungsgemäßen Vorrichtung 10. Ein von einem Laser 12 erzeugter Lichtstrahl 14, der aus einzelnen Lichtimpulsen besteht, wird über eine Lichtablenkeinheit 16 in die Scanebene 18 gelenkt und dort entweder vom leeren Förderband 50 oder vom Fördergut 54 remittiert. Das remittierte Licht 20 gelangt wieder zurück zum Laserscanner 11 und wird dort über die Ablenkeinheit 16 und mittels einer Empfangsoptik 22 von einem Empfänger 24 detektiert. Die Lichtablenkeinheit 16 ist in der Regel drehbar ausgestaltet, wobei ein Motor 26 einen Drehspiegel 28 kontinuierlich rotiert. Die jeweilige Winkelstellung des Drehspiegels 28 wird über einen Winkelgeber 30 erfasst. Der von dem Laser 12 erzeugte Lichtstrahl 14 überstreicht somit die durch die Rotationsbewegung erzeugte Scanebene 18, die in diesem Ausführungsbeispiel durch Randstrahlen 64 und 66 seitlich begrenzt ist. Wird ein remittiertes Lichtsignal 20 vom Empfänger 24 empfangen, so kann aus der Winkelstellung der Ablenkeinheit 30 auf den Winkelwert α des Remissionspunktes P in der Scanebene 18 geschlossen werden. Zusätzlich wird die Laufzeit der einzelnen Laserlichtpulse des Sendelichts 14 vom Aussenden bis zum Empfang der Remission überwacht und aus der Lichtlaufzeit unter Verwendung der Lichtgeschwindigkeit auf die Entfernung d des Remissionspunktes P vom Laserscanner 11 geschlossen. Diese Auswertung erfolgt in einer Auswerteeinheit 32, die dafür mit dem Laser 12, dem Empfänger 24, dem Motor 26 und Winkelgeber 30 verbunden ist. Mit den Winkel- und Entfernungswerten α und d lässt sich der Ort des jeweiligen Remissionspunktes P, also die Ortsdaten, ermitteln und auf diese Weise das vollständige Profil 58 erfassen.

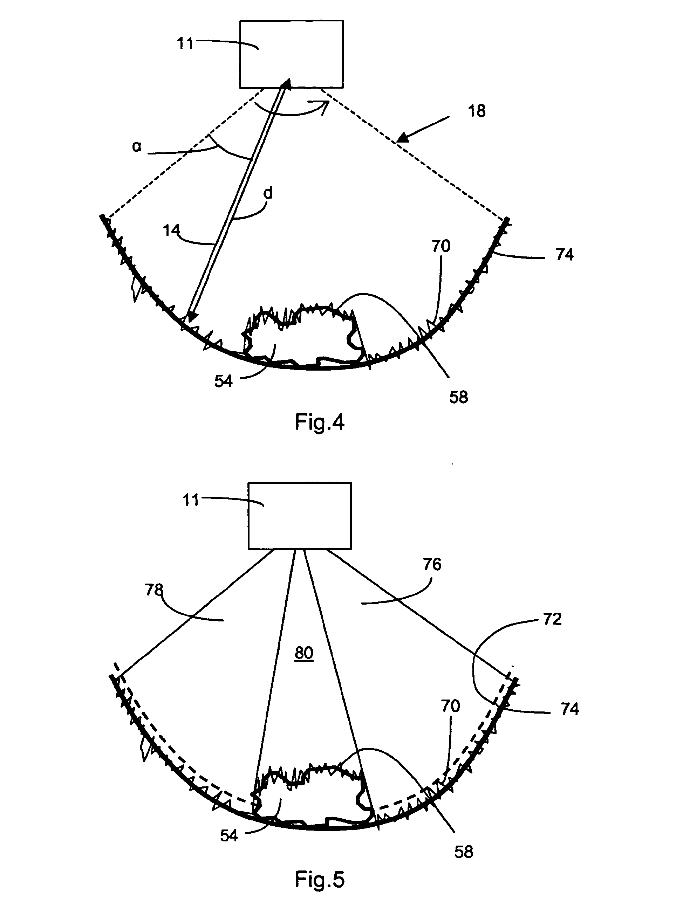

Mit der erfindungsgemäßen Vorrichtung 10 lässt sich das erfindungsgemäße Verfahren durchführen, das im Folgenden insbesondere anhand der Fig. 4 bis 7 erläutert wird. Die Fig. 4 bis 7, die prinzipiell eine Darstellung wie Fig. 2 zeigen, dienen lediglich der Verdeutlichung des Verfahrens und zeigen Förderband 50, Fördergut 54, Laserscanner 11 und weitere Darstellungen, beispielsweise die der Lichtstrahlen 14 nur stark schematisiert. Abmessungen und Formen von Darstellungen, beispielsweise des Fördergutes, müssen in keiner Weise zu Fig. 2 konsistent sein.

In einem Initialisierungsschritt wird zunächst das leere Förderband mit dem Laserscanner 11 vermessen. Dann wird beispielsweise durch Glättung der gemessenen Entfernungswerte eine Nulllinie 74 erhalten, die im Wesentlichen der Lage des leeren Förderbandes entspricht. Dabei entspricht selbstverständlich ein Entfemungswert d immer einem zugehörigen Winkelwert α. Danach wird ein Schwellwert S als ein bestimmter Abstand zur Nulllinie 74 bestimmt, der entweder manuell eingegeben werden kann, oder der von der Vorrichtung selbst ermittelt werden kann, indem beispielsweise die Streuung der Entfernungswerte berücksichtigt wird, so dass beispielsweise der Schwellwert S so gelegt wird, dass 95 % der Entfernungswerte den Schwellwert nicht über- bzw. unterschreiten. Es versteht sich, dass der Schwellwert auch winkelabhängig sein kann, also nicht für alle Winkel der gleiche Schwellwert gelten muss.

In einem ersten Verfahrensschritt wird nun das Profil 58 in der Scanebene 18 vermessen. In Fig. 4 ist nur einer der Lichtstrahlen 14, die wie oben beschrieben erzeugt werden, dargestellt. Die unregelmäßige Linie 70 soll den Verlauf der im Scan erhaltenen Ortsdaten P darstellen. Diese Ortsdaten stellen die Rohdaten für das gemessene Profil 58 dar. Die Streuung der Entfernungswerte d ist zum besseren Verständnis stark übertrieben dargestellt.

Nachdem das Profil 58, das im Wesentlichen identisch ist mit der Linie 70, aufgenommen wurde, werden nun die Entfernungswerte d daraufhin überprüft, ob sie den für den jeweiligen Winkel α gültigen Schwellwert S über- bzw. unterschreiten. Dieser Schwellwert ist in Fig. 5 als gestrichelte Linie 72 erkennbar. Liegt ein Entfemungswert näher an dem Laserscanner 11 als die Linie 72 entfernt ist, wird das entsprechende Wertepaar bestehend aus Winkelwert α und Entfemungswert d als den Fördergutdaten zugehörig klassifiziert. Im anderen Fall als den Förderbanddaten zugehörig. Diese Klassifizierung erfolgt mit Klassifizierungsmitteln 63.3.

Im nächsten Schritt werden diejenigen Winkelbereiche bestimmt, in denen ausschließlich Förderbanddaten vorliegen - in Fig. 5 sind das beispielsweise die Winkelbereiche 76 und 78 - und diejenigen Winkelbereiche bestimmt, in denen ausschließlich Fördergutdaten vorliegen - in Fig. 5 ist dies der Winkelbereich 80.

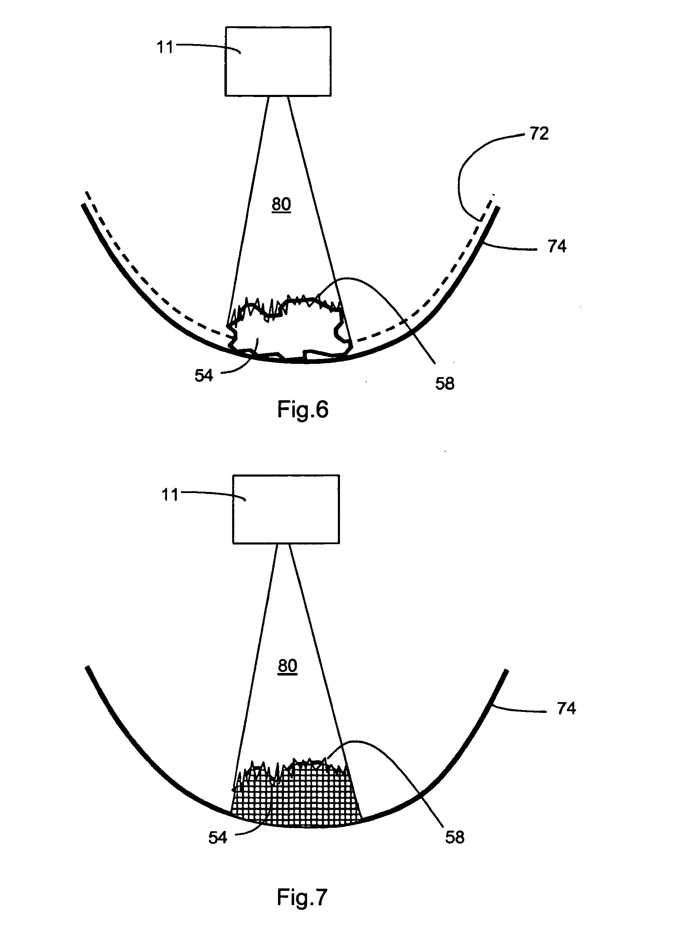

Im nächsten Verfahrenschritt, der in Fig. 6 angedeutet ist, werden die Winkelbereiche 76 und 78, in denen ausschließlich Förderbanddaten vorliegen, für die weitere Auswertung verworfen.

Fig. 7 schließlich verdeutlicht den letzten Verfahrensschritt, in dem ausschließlich Fördergutdaten für die weitere Auswertung herangezogen werden (kariert dargestellte Fläche) und aus diesen das Volumen des Förderguts 54 bestimmt wird, indem das Volumen abschnittsweise berechnet wird anhand eines Abschnittsvolumens des Förderguts, das sich ausschließlich durch die Fördergutdaten und eines in Förderrichtung verlaufenden Förderabschnitt bestimmt. Die so bestimmten Abschnittvolumina werden zu dem zu bestimmenden Volumen aufintegriert.

In einer Ausführungsform des erfindungsgemäßen Verfahrens kann während der Volumenbestimmung, beispielsweise nach jedem Scan und nach dem Bestimmen der Förderbanddaten, die Lage der Nulllinie korrigiert werden, da die Förderbanddaten die Nulllinie bestimmen. Dies kann selbstverständlich nur in den Winkelbereichen 76 und 78 geschehen. Auf diese Weise kann beispielsweise ein Heben und Senken oder ein Flattern der leeren Bereiche des Förderbandes berücksichtigt werden, was die Messgenauigkeit weiter erhöht.

## Patentansprüche

1. Verfahren zum Bestimmen des Volumens eines auf einem Förderband (50) geförderten Förderguts (54) mit folgenden Schritten:
- Erfassen eines Höhenprofils (58) quer zur Förderrichtung (56) mittels eines optoelektronischen Entfernungsmessgeräts, insbesondere eines Scanners (11), der das Profil (58) mittels einer Reihe von in einer Scanebene (18) liegenden Ortsdaten (P) in Form von Polarkoordinaten mit Entfernungs- (d) und Winkeldaten (α) zwischen dem Entfernungsmessgerät (11) und dem Förderband (50) über die volle Breite des Förderbandes (50) erfasst,
- Klassifizieren der beim Erfassen des Profils (58) erhaltenen Ortsdaten (P) in Fördergutdaten und Förderbanddaten,
- abschnittsweises Berechnen eines Abschnittsvolumens des Förderguts (54) ausschließlich anhand der Fördergutdaten und eines in Förderrichtung (56) verlaufenden Förderabschnitts und
- Aufintegrieren der Abschnittsvolumina zu dem geförderten Volumen,
**dadurch gekennzeichnet, dass** zum Klassifizieren diejenigen Ortsdaten als Fördergutdaten identifiziert werden, deren Abstand zu einer Nulllinie (74) einen Schwellwert (72) übersteigt

2. Verfahren nach einem der vorhergehenden Ansprüche, **dadurch gekennzeichnet, dass** vor Beginn einer Volumenbestimmung das Förderband (50) ohne Fördergut vermessen wird, zum Erhalt von Förderbanddaten über die gesamte Förderbandbreite und daraus die Nulllinie (74) bestimmt wird.

3. Verfahren nach einem der vorhergehenden Ansprüche, **dadurch gekennzeichnet, dass** zur Bestimmung des Schwellwertes (72) die Entfemungswertstreuung in den Förderbanddaten berücksichtigt wird.

4. Verfahren nach einem der vorhergehenden Ansprüche, **dadurch gekennzeichnet, dass** anhand der während der Volumenbestimmung erhaltenen Förderbanddaten die Lage der Nulllinie (74) korrigiert wird.

5. Verfahren nach einem der vorhergehenden Ansprüche, **dadurch gekennzeichnet, dass** die Ortsdaten mittels eines oberhalb des Förderbandes (50) angeordneten Scanners (11), insbesondere eines Laserscanners (11), erfasst werden.

6. Verfahren nach einem der vorhergehenden Ansprüche, **dadurch gekennzeichnet, dass** beim Klassifizieren die Fördergutdaten und Förderbanddaten jeweils Winkelbereichen (76 und 78 bzw. 80) zugeordnet werden.

7. Vorrichtung zur Bestimmung des Volumens eines auf einem Förderband (50) geförderten Förderguts (54) mit einem Laserscanner (11) umfassend einen Lichtsender (12), eine Lichtablenkeinheit (16) zur periodischen Ablenkung des Lichtes in eine Scanebene (18), einen Empfänger (24) zum Empfang von an dem Förderband (50) oder dem Fördergut (54) remittierten Licht, eine Auswerteeinheit (32) zur Bestimmung von Ortsdaten in Form von Polarkoordinaten für das remittierte Licht, zur Erstellung eines Höhenprofils (58) quer zur Förderrichtung (56) und weiter umfassend eine Volumenauswerteeinheit (62) zur Bestimmung des Volumens des geförderten Förderguts (54), **gekennzeichnet durch** Klassifizierungsmittel (63.3) zur Klassifizierung der Ortsdaten in Fördergutdaten und Förderbanddaten, wobei diejenigen Ortsdaten als Fördergutdaten identifiziert werden, deren Abstand zu einer Nulllinie (74) einen Schwellwert (72) übersteigt, und die Volumenauswerteinheit (62) Rechenmittel (63.1) aufweist zum abschnittsweisen Berechnen eines Abschnittsvolumens des Förderguts (54) ausschließlich anhand der Fördergutdaten und eines in Förderrichtung (56) verlaufenden Förderabschnitts und Integriermittel (63.2) aufweist zum Aufintegrieren der Abschnittsvolumina zu dem geförderten Volumen.

## Claims

1. Method for determining the volume of material (54) transported on a conveyor belt (50) comprising the steps:
- Detecting a height profile (58) transversely to the conveying direction (56) by means of an optoelectronic distance measuring device, in particular a scanner (11), the scanner detects the profile (58) over the full width of the conveyor belt (50) by means of a series of position data (P) lying in a scanning plane (18) in the form of polar coordinates with distance data (d) and angle data (α) between the distance measuring device (11) and the conveyor belt (50),
- Classifying of said location data (P) obtained upon detection of the profile (58) in a material data class and a conveyor belt data class,
- step-by-step calculation of a volume section of the conveyed material (54) solely by means of the material data and a conveying section in conveying direction (56) and
- Integration of the volume sections to the conveyed volume,
**characterized in that** for classifying, those position data which distance to a zero line (74) exceeds a threshold value (72), are identified as material data.

2. Method according to any one of the preceding claims, **characterized in that** before the start of a volume determination, the conveyor belt (50) is measured without transported material for getting conveyor belt data over the entire conveyor belt width and the zero line (74) is determined therefrom.

3. Method according to any one of the preceding claims, **characterized in that** the distribution of the conveyor belt data is taken into account for determining the threshold value (72).

4. Method according to any one of the preceding claims, **characterized in that** the position of the zero line (74) is corrected on the basis of the conveyor belt data obtained during the volume determination.

5. Method according to any one of the preceding claims, **characterized in that** the position data are measured by means of a scanner (11), in particular a laser scanner (11), arranged above the conveyor belt (50).

6. Method according to any one of the preceding claims, **characterized in that** the material data and the conveyor belt data are assigned to angular ranges (76 and 78 or 80) during classifying.

7. Apparatus for determining the volume of material (54) transported on a conveyor belt (50), comprising a laser scanner (11) comprising a light transmitter (12), a light deflecting unit (16) for periodic deflection of the light in a scanning plane (18), a receiver (24) for receiving light diffusely reflected from the conveyor belt (50) or the conveyed material (54), an evaluation unit (32) for determining position data in the form of polar coordinates for the diffusely reflected light in order to create a height profile (58) transversely to the conveying direction (56) and further comprising a volume evaluation unit (62) for determining the volume of the conveyed material (54) being conveyed, **characterized by** classifying means (63.3) for the classification of the position data in material data and conveyor belt data, wherein those position data which distance to a zero line (74) exceeds a threshold value (72) are identified as material data, and the volume evaluation unit (62) comprises computing means (63.1) for sectionalized calculating a section volume of the conveyed material (54) solely by means of the material data and a conveyor section extending in conveying direction (56), and comprises integrating means (63.2) for integrating the volume sections to the conveyed volume.

## Revendications

1. Procédé pour la détermination du volume de matière (54) transportée sur une bande transporteuse (50) comprenant les étapes suivantes:
- Détection d'un profil de hauteur (58) transversalement à la direction du transport (56) au moyen d'un dispositif optoélectronique de mesure de distance, en particulier un scanner (11), le scanner détecte le profil (58) sur toute la largeur de la bande transporteuse (50) au moyen d'une série des données de position (P) situées dans un plan de balayage (18), les données de position sont en forme de coordonnées polaires qui ont des données de distance (d) et des données d'angle (α) entre le dispositif de mesure de distance (11) et la bande transporteuse (50),
- Classification desdites données de localisation (P) obtenues lors de la détection du profil (58) en données de matière et données de la bande transporteuse,
- Calcul par section d'une section de volume de matière transportée (54) uniquement par les données de matière et une section de transport dans la direction de transport (56) et
- Intégration des sections de volume sur le volume transporté,
**caractérisé en ce que** pour la classification, ces données de position dont la distance à une ligne zéro (74) dépasse une valeur de seuil (72), sont identifiées comme des données de matière.

2. Procédé selon l'une quelconque des revendications précédentes, **caractérisé en ce que**, avant le début d'une détermination du volume, la bande transporteuse (50) est mesurée sans matière transportée pour obtenir des données de la bande transporteuse sur toute la largeur de la bande transporteuse, et la ligne zéro (74) est déterminée de celle-ci.

3. Procédé selon l'une quelconque des revendications précédentes, **caractérisé en ce que** la distribution des données de la bande transporteuse est considérée pour la détermination de la valeur de seuil (72).

4. Procédé selon l'une quelconque des revendications précédentes, **caractérisé en ce que** la position de la ligne zéro (74) est corrigée sur la base des données de la bande transporteuse obtenues lors de la détermination du volume.

5. Procédé selon l'une quelconque des revendications précédentes, **caractérisé en ce que** les données de position sont mesurées au moyen d'un scanner (11), en particulier un scanner laser (11), disposé au-dessus de la bande transporteuse (50).

6. Procédé selon l'une quelconque des revendications précédentes, **caractérisé en ce que** les données de matière et les données de la bande transporteuse sont affectées à des zones angulaires (76 et 78 ou 80) pendant la classification.

7. Appareil pour déterminer le volume de matière (54) transportée sur une bande transporteuse (50), comprenant un scanner laser (11) comprenant un émetteur de lumière (12), une unité de déviation de lumière (16) pour la déviation périodique de la lumière dans un plan de balayage (18), un récepteur (24) pour recevoir la lumière réfléchie de manière diffuse à partir de la bande transporteuse (50) ou de la matière transportée (54), une unité d'évaluation (32) pour déterminer des données de position en forme de coordonnées polaires pour la lumière réfléchie de manière diffuse afin de créer un profil de hauteur (58) transversalement à la direction du transport (56) et comprenant en outre une unité d'évaluation de volume (62) pour la détermination du volume de matière transportée (54) étant transportée, **caractérisé par** des moyens de classification (63.3) pour la classification des données de position dans les données de matière et des données de la bande transporteuse, en ce que les données de position dont la distance à une ligne zéro (74) dépasse une valeur de seuil (72) sont identifiées comme des données de matière, et l'unité d'évaluation de volume (62) comprend des moyens de calcul (63.1) pour calculer par section une section de volume de matière transportée (54) uniquement par des données de matière et une section de convoyeur qui s'étendent dans la direction du transport (56), et l'unité d'évaluation de volume (62) comprend des moyens d'intégration (63.2) pour intégrer les sections de volume au volume transporté.
